# EUROPEAN PATENT SPECIFICATION

(11) **EP 4 292 186 B1**
(45) Date of publication and mention of the grant of the patent: **01.10.2025**
(21) Application number: 22708226.0
(22) Date of filing: 14.02.2022
(51) Int. Cl.: H02J 3/30, F01D 15/10, H02K 7/02

(54) **FLYWHEEL BATTERY**
SCHWUNGRADBATTERIE
BATTERIE À VOLANT D'INERTIE

(30) Priority: 15.02.2021 IT 202100003314
(43) Date of publication of application: 20.12.2023
(73) Proprietor: MALEX EUROPE S.R.L., 66016 Guardiagrele (IT)
(72) Inventor: BUFIS, Marco, 66023 Francavilla al Mare (IT)
(74) Representative: Pizzoli, Antonio Mario
(86) International application number: PCT/IB2022/051274
(87) International publication number: WO 2022/172231

(56) References cited:
- US-A- 4 128 020
- US-A1- 2011 175 370
- US-B1- 10 900 540

## Description

### Technical field

The present description relates to a flywheel battery, in particular a flywheel battery which can be used for example in vehicles and electric power generators.

### Background of the description

Known flywheel batteries comprise a flywheel connected to a rotor coupled to a stator in order to transform electrical energy, namely an electrical current in the stator, into the rotation of the flywheel, and vice versa.

However, the mass, the diameter and/or the speed of the flywheel must be increased to increase the capacity of known flywheel batteries, with consequent problems of weight, footprint and/or gyroscopic effect, which reduce their safety, efficiency, portability and/or economic convenience.

US 2001/175370, US 4128020 and US 10900540 disclose known flywheel batteries.

### Summary of the description

The object of the present description is therefore to provide a flywheel battery free from such drawbacks. Said object is achieved with a flywheel battery, which is defined by the subject-matter of independent claim 1. Preferred embodiments of the invention are defined in the dependent claims.

Thanks to the particular combination of flywheels which rotate like satellites around a central shaft, the flywheel battery according to the present description maximizes the accumulation of energy per unit of mass, so as to limit the weight, the production, maintenance and disposal costs, the deterioration over time, the gyroscopic effect and the risk of accidents compared to the known flywheel batteries.

In particular, if Ec1 represents the component of kinetic energy due to the masses m of the n flywheels in a circular motion of radius R with angular velocity ω of the central shaft and Ec2 represents the kinetic energy stored by the set of n flywheels per rotation around their own axis with angular velocity ω', where J represents the moment of inertia around this axis of the single flywheel, the energy that can be accumulated by the present flywheel battery is therefore given by the equation Ec = Ec1 + Ec2 where Ec1 = (n*m*R*ω²)/2 and Ec2 = (n*ω'²*J)/2.

The above equation shows that the increase in accumulated energy and therefore the charge density is greater than in a battery with a flywheel keyed to the central shaft, whose accumulated energy is only Ec = (ω²*J)/2.

Preferably, in the present flywheel battery the flywheels rotate around their axis thanks to a transmission comprising a ring gear with an inner gearing fixed in a vacuum chamber containing the flywheels and pinions keyed on the secondary shafts of the flywheels. Thus, the kinetic energy of the system of flywheels and supports is increased as a function of the ratio of the angular velocities of the central shaft and of the secondary shafts, so that the energy stored by the flywheel battery will be determined by the sum of the kinetic energy obtained from these two angular velocities.

Once the flywheels are placed in rotation, the flywheel battery keeps kinetic energy thanks to the minimalization of dispersions and friction, in particular the friction due to the fluid in which the rotating system is immersed, which is arranged inside a particular vacuum chamber.

The flywheel battery preferably comprises one or two stators which can be moved towards or away from the respective rotors, so as to avoid the braking effect of the stators when they are not in use.

### Brief description of the drawings

Further advantages and features of the flywheel battery according to the present description will become evident to those skilled in the art from the following detailed description of some embodiments, to be considered as non-limiting examples of the claims, with reference to the attached drawings in which:
- Figure 1 is an isometric view of the flywheel battery;
- Figure 2 is an isometric view of the interior of the flywheel battery;
- Figure 3 is a front view of the flywheel battery;
- Figure 4 is section IV-IV of Figure 3;
- Figure 5 is section V-V of Figure 3;
- Figure 6 is an exploded view of the flywheel battery.

### Exemplary embodiments

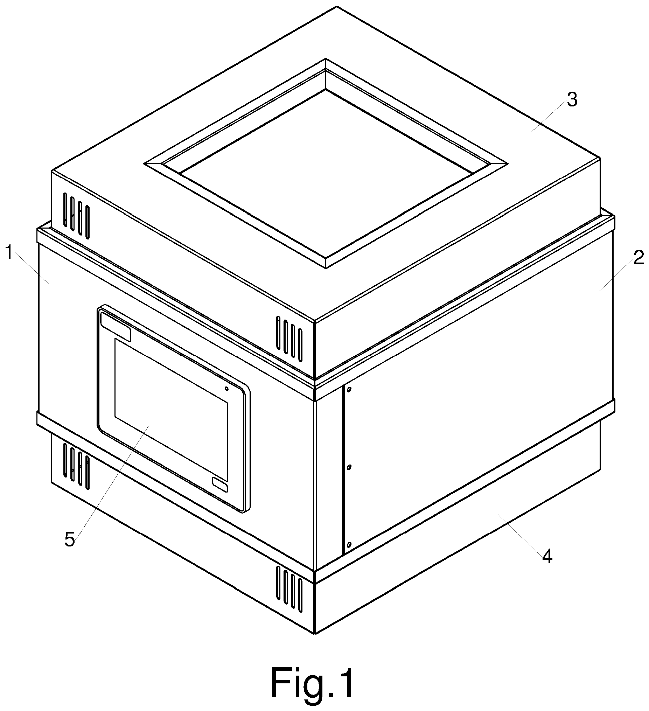

Figure 1 shows an embodiment of the flywheel battery, which can be provided with a container which has a substantially rectangular parallelepiped shape and comprises for example two side covers 1, 2, both with two substantially perpendicular walls, an upper cover 3 and a lower cover 4. Covers 1-4 can be made of metal sheet to protect the internal parts from shocks, dust, liquids or flames, as well as shielding from external electromagnetic fields, acting as a Faraday cage. The side cover 1 can comprise electronic control means, in particular a control unit 5 provided with a touchscreen.

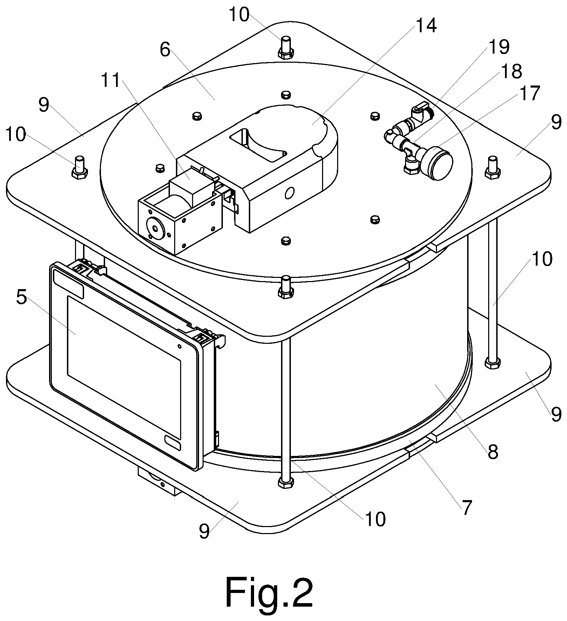

Figure 2 shows that the container 1-4 includes a vacuum chamber which comprises for example an upper base 6, a lower base 7 and at least one side wall 8, which are hermetically joined together by a plurality of brackets 9 and tie rods 10. The vacuum chamber 6-8 preferably has a substantially cylindrical shape.

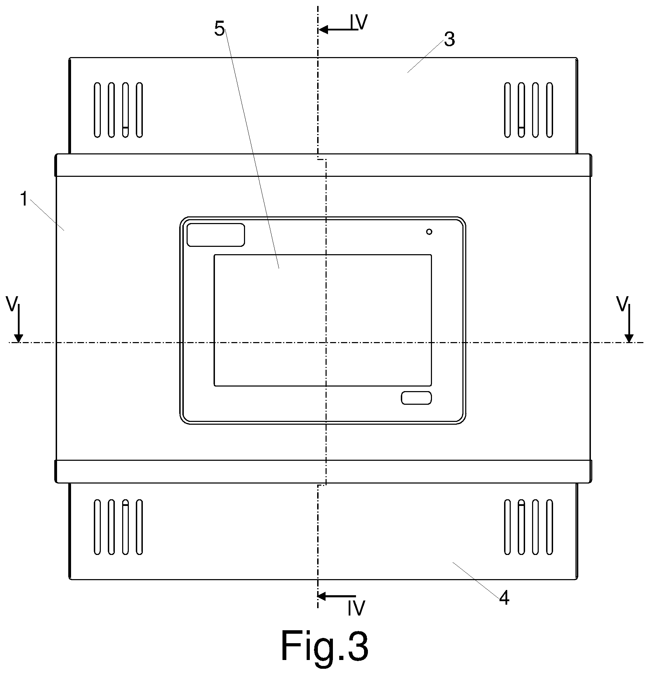

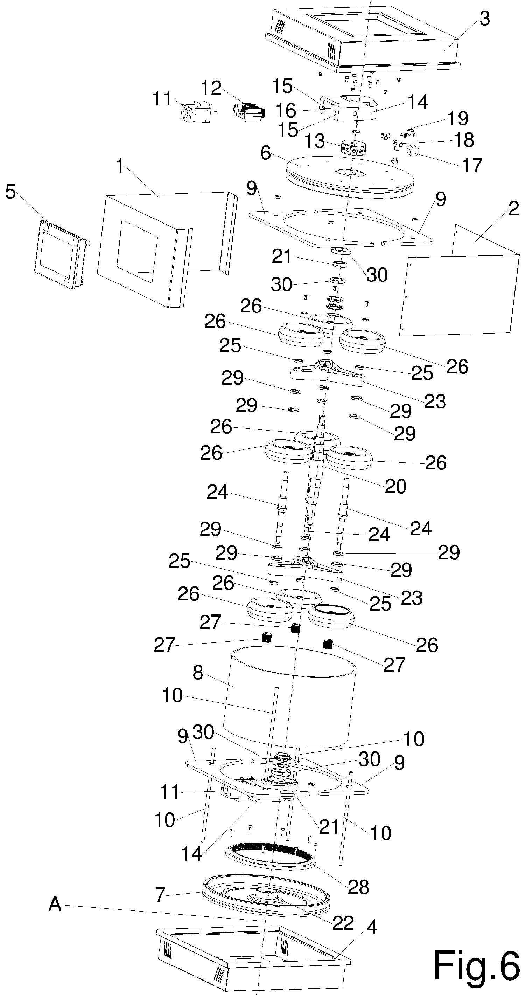

Figures 3 to 6 show that at least one actuator 11, preferably electromagnetic, is arranged outside the vacuum chamber 6-8, for example on the upper base 6, to move at least one coil 12 acting as a stator, towards or from at least a rotor 13, which is provided with a plurality of magnets, in particular sixteen permanent magnets, with the N-S polarities oriented radially with respect to the axis of the rotor 13 and alternately with respect to the adjacent magnets.

The rotor 13 is arranged in at least one housing 14 hermetically fixed on the upper base 6 of the vacuum chamber 6-8 and in fluid connection with the interior of the latter, so that vacuum is also present in the housing 14.

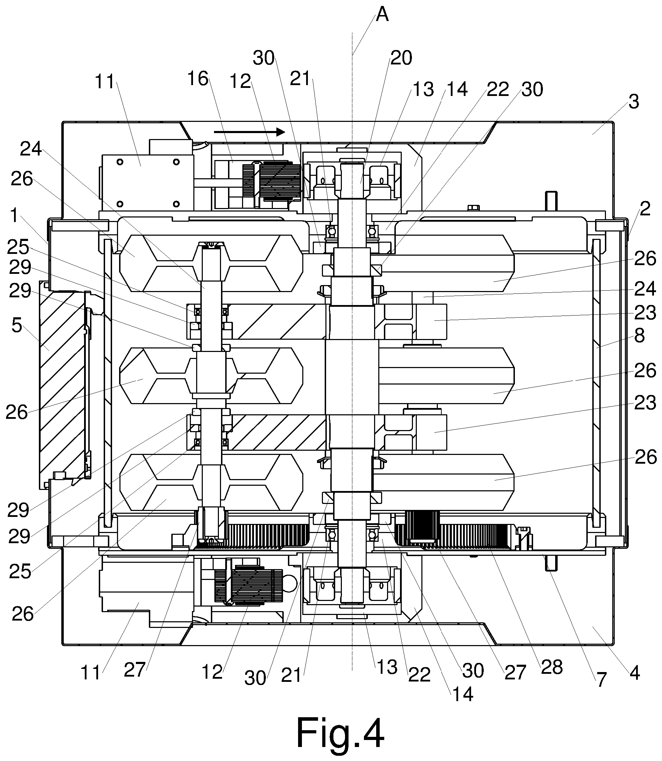

In a charging phase of the flywheel battery, namely transformation of electrical energy into kinetic energy, the actuator 11 moves the stator 12, in particular by translating it in the direction of the arrow of figure 4, towards the rotor 13, preferably along guides 15 obtained in a seat 16 arranged outside the housing 14 of the rotor 13. The stator 12 can therefore be arranged beside the rotor 13, while remaining outside the vacuum chamber 6-8, and an external source (not shown in the figures) can supply electric current to the stator 12 to rotate the rotor 13, in particular by generating a rotating magnetic field. The actuator 11 moves the stator 12 away from the rotor 13 when the flow of electric current in the stator 12 is interrupted.

The housing 14 is preferably made of diamagnetic material in order not to generate dispersions due to the rotation of the magnets of the rotor 13. The vacuum chamber 6-8 can be provided with a vacuum gauge 17 fixed to the outside of the upper base 6 to measure the level of the vacuum in the vacuum chamber 6-8. The vacuum can be created by means of a pump connected to a duct 18 which opens into an opening in the vacuum chamber 6-8 and is provided with a valve 19 arranged in parallel with the vacuum gauge 17.

The rotor 13 is mechanically connected, in particular keyed, to a central shaft 20 which can rotate around a central axis A in the vacuum chamber 6-8, in particular by means of bearings 21 arranged in hubs 22 fixed to the upper base 6 and/or at the lower base 7, which bases have central openings so that one or both ends of the central shaft 20 can protrude beyond the vacuum chamber 6-8, in particular into the housing 14. The central axis A can be substantially coaxial to the longitudinal axis of the vacuum chamber 6-8.

One or more supports 23 are joined to the central shaft 20 and are arranged in the vacuum chamber 6-8. In particular, at least two supports 23 comprising at least three radial arms are keyed around the central shaft 20. One or more supports 23 comprise at least one hub, preferably arranged at one end of each radial arm, in which a secondary shaft 24 can rotate by means of one or more bearings 25. The axis of the secondary shaft 24 is substantially parallel to the central axis A. One or more flywheels 26 are mechanically connected, in particular keyed, to each secondary shaft 24. In particular, at least three flywheels 26 they are keyed to a secondary shaft 24, in which a support 23 is arranged between two flywheels 26.

Further embodiments may include different numbers of supports 23, secondary shafts 24 and/or flywheels 26.

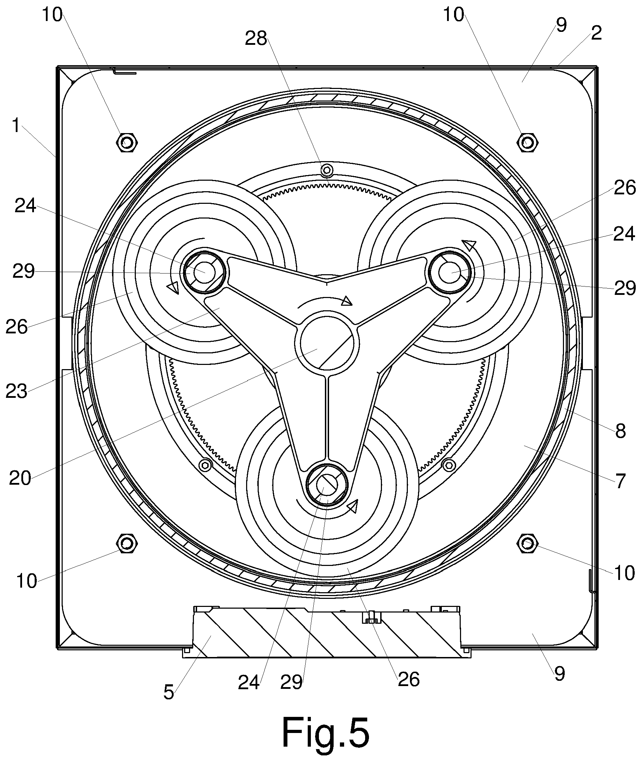

At least one end of each secondary shaft 24 is provided with at least one pinion 27 which is meshed with at least one ring gear 28, preferably having an internal gearing, so that when the central shaft 20 rotates in one direction (for example clockwise as shown in Figure 5), the flywheels 26 rotate both around the central axis A and around the respective longitudinal axis in the opposite direction (for example counterclockwise as shown in Figure 5), thanks to the transmission comprising the pinions 27 and the ring gear 28.

Further embodiments may include transmissions, for example magnetic and/or mechanical, which are different from the gear 27-28 for rotating the flywheels 26 around their axis.

Preferably, the ring gear 28 is joined to the lower base 7 of the vacuum chamber 6-8 and the pinions 27 are arranged at the end of the secondary shafts 24 facing the lower base 7. Magnetic rings 29, 30 with opposite polarities can be arranged around the central shaft 20 and/or the secondary shafts 24, respectively, to reduce friction with the hubs 22 and/or the supports 23.

A further actuator 11 can be arranged outside the vacuum chamber 6-8, for example under the lower base 7, to move a further coil 12 acting as a stator, towards or from a further rotor 13 arranged in a further housing 14 hermetically fixed under the lower base 7. The further rotor 13 is mechanically connected, in particular keyed, to the end of the central shaft 20 opposite the end provided with the first rotor 13. The further stator 12 can act as a generator of electric current induced by the rotation of the further rotor 13, under the control of the control unit 5, when the stator 12 is moved close to the rotor 13 by the actuator 11.

The pairs of actuators 11, stators 12, rotors 13 and/or housings 14 can be substantially identical to each other or different according to the electrical specifications of the flywheel battery.

In use, a given speed ratio directly proportional to the ratio of the teeth of the pinions 27 and of the ring gear 28 corresponds to a rotation of the central shaft 20 with the supports 23, so that the angular velocity of the flywheels 26 increases proportionally to the angular velocity of the central shaft 20, and vice versa.

## Claims

1. Flywheel battery comprising at least one rotor (13) mechanically connected to at least one flywheel (26) through at least one central shaft (20) suitable to rotate around a central axis (A), wherein the central shaft (20) is joined to one or more supports (23) comprising at least one hub in which at least one secondary shaft (24) can rotate, wherein one or more flywheels (26) are mechanically connected to the secondary shaft (24) to rotate around the central axis (A) and around an axis which is substantially parallel to the central axis (A) and does not coincide with the central axis (A), by means of a transmission (27, 28).

2. Flywheel battery according to the preceding claim, wherein the rotor (13) is keyed to the central shaft (20) and/or the flywheels (26) are keyed to one or more secondary shafts (24).

3. Flywheel battery according to one of the preceding claims, wherein the supports (23) comprise at least three radial arms having a hub arranged at one end of each radial arm, a secondary shaft (24) being arranged in each hub.

4. Flywheel battery according to one of the preceding claims, wherein the central shaft (20) comprises at least two supports (23), wherein a support (23) is arranged between at least two flywheels (26) arranged on at least one secondary shaft (24).

5. Flywheel battery according to one of the preceding claims, wherein the central shaft (20), the supports (23) and the flywheels (26) are arranged in a vacuum chamber (6-8) which comprises an upper base (6), a lower base (7) and at least one side wall (8).

6. Flywheel battery according to the preceding claim, wherein the at least one rotor (13) is arranged in at least one housing (14) hermetically fixed on the upper base (6) and/or under the lower base (7) of the vacuum chamber (6-8) and in fluid connection with the inside of the latter.

7. Flywheel battery according to the preceding claim, wherein the at least one housing (14) is made of diamagnetic material.

8. Flywheel battery according to one of the preceding claims, wherein at least one actuator (11) is suitable to move at least one stator (12) towards or from the at least one rotor (13) to rotate the rotor (13) and/or generate electric current in the stator (12).

9. Flywheel battery according to one of the preceding claims, wherein the at least one rotor (13) is provided with a plurality of magnets with the N-S polarities oriented radially with respect to the axis of the rotor (13) and alternately with respect to the adjacent magnets.

10. Flywheel battery according to one of the preceding claims, wherein said transmission (27, 28) is a magnetic and/or mechanical transmission suitable to rotate the flywheels (26) around their axis in one direction when the central shaft (20) rotates in the opposite direction around the central axis (A).

11. Flywheel battery according to one of the preceding claims, wherein said transmission (27, 28) comprises at least one pinion (27) which is keyed to at least one secondary shaft (24) and is meshed with at least one ring gear (28).

12. Flywheel battery according to the preceding claim, wherein the ring gear (28) is fixed in a vacuum chamber (6-8) containing the flywheels (26).

13. Flywheel battery according to claim 11 or 12, wherein the ring gear (28) has an inner gearing in which the at least one pinion (27) is engaged.

14. Flywheel battery according to one of claims 11 to 13, wherein a given speed ratio directly proportional to the ratio of the teeth of the pinions (27) and of the ring gear (28) corresponds to a rotation of the central shaft (20) with the supports (23), so that the angular velocity of the flywheels (26) increases proportionally to the angular velocity of the central shaft (20), and vice versa.

15. Flywheel battery according to one of the preceding claims, wherein magnetic rings (29, 30) with opposite polarities are arranged around the central shaft (20) and/or at least one secondary shaft (24).

## Patentansprüche

1. Schwungradbatterie, umfassend mindestens einen Rotor (13), der mechanisch mit dem mindestens einen Schwungrad (26) durch mindestens eine zentrale Welle (20) verbunden ist, die dazu geeignet ist, sich um eine zentrale Achse (A) zu drehen, wobei
die zentrale Welle (20) mit einem oder mehreren Trägern (23) verbunden ist, die mindestens eine Nabe umfassen, in der sich mindestens eine Sekundärwelle (24) drehen kann, wobei ein oder mehrere Schwungräder (26) mechanisch mit der Sekundärwelle (24) verbunden sind, um sich um die zentrale Achse (A) und um eine Achse zu drehen, die im Wesentlichen parallel zu der zentralen Achse (A) ist und nicht mit der zentralen Achse (A) zusammenfällt, mittels eines Getriebes (27, 28).

2. Schwungradbatterie nach dem vorhergehenden Anspruch, wobei der Rotor (13) mit der zentralen Welle (20) verkeilt ist und/oder die Schwungräder (26) mit einer oder mehreren Sekundärwellen (24) verkeilt sind.

3. Schwungradbatterie nach einem der vorhergehenden Ansprüche, wobei die Träger (23) mindestens drei radiale Arme mit einer Nabe umfassen, die an einem Ende jedes radialen Arms angeordnet ist, wobei eine Sekundärwelle (24) in jeder Nabe angeordnet ist.

4. Schwungradbatterie nach einem der vorhergehenden Ansprüche, wobei die zentrale Welle (20) mindestens zwei Träger (23) umfasst, wobei ein Träger (23) zwischen mindestens zwei Schwungrädern (26) angeordnet ist, die an mindestens einer Sekundärwelle (24) angeordnet sind.

5. Schwungradbatterie nach einem der vorhergehenden Ansprüche, wobei die zentrale Welle (20), die Träger (23) und die Schwungräder (26) in einer Unterdruckkammer (6-8) angeordnet sind, die eine obere Grundplatte (6), eine untere Grundplatte (7) und mindestens eine Seitenwand (8) umfasst.

6. Schwungradbatterie nach dem vorhergehenden Anspruch, wobei mindestens ein Rotor (13) in mindestens einem Gehäuse (14) angeordnet ist, das hermetisch an der oberen Grundplatte (6) und/oder unter der unteren Grundplatte (7) der Unterdruckkammer (6-8) befestigt ist und in fluidtechnischer Verbindung mit dem Inneren der Letzteren steht.

7. Schwungradbatterie nach dem vorhergehenden Anspruch, wobei das mindestens eine Gehäuse (14) aus diamagnetischem Material besteht.

8. Schwungradbatterie nach einem der vorhergehenden Ansprüche, wobei mindestens ein Aktuator (11) dazu geeignet ist, mindestens einen Stator (12) in Richtung des mindestens einen Rotors (13) oder davon weg zu bewegen, um den Rotor (13) zu drehen und/oder um elektrischen Strom in dem Stator (12) zu erzeugen.

9. Schwungradbatterie nach einem der vorhergehenden Ansprüche, wobei der mindestens eine Rotor (13) mit einer Vielzahl von Magneten versehen ist, deren N-S-Polaritäten radial in Bezug auf die Achse des Rotors (13) und abwechselnd in Bezug auf die benachbarten Magnete ausgerichtet sind.

10. Schwungradbatterie nach einem der vorhergehenden Ansprüche, wobei das Getriebe (27, 28) ein magnetisches und/oder mechanisches Getriebe ist, das dazu geeignet ist, die Schwungräder (26) um deren Achse in einer Richtung zu drehen, wenn sich die zentrale Welle (20) in der entgegengesetzten Richtung um die zentrale Achse (A) dreht.

11. Schwungradbatterie nach einem der vorhergehenden Ansprüche, wobei das Getriebe (27, 28) mindestens ein Ritzel (27) umfasst, das mit mindestens einer Sekundärwelle (24) verkeilt ist und mit mindestens einem Zahnkranz (28) ineinandergreift.

12. Schwungradbatterie nach dem vorhergehenden Anspruch, wobei der Zahnkranz (28) in einer Unterdruckkammer (6-8), die die Schwungräder (26) enthält, befestigt ist.

13. Schwungradbatterie nach Anspruch 11 oder 12, wobei der Zahnkranz (28) eine Innenverzahnung aufweist, in die das mindestens eine Ritzel (27) eingreift.

14. Schwungradbatterie nach einem der Ansprüche 11 bis 13, wobei ein bestimmtes Drehzahlverhältnis, das direkt proportional zum Verhältnis der Zähne der Ritzel (27) und des Zahnkranzes (28) ist, einer Drehung der zentralen Welle (20) mit den Trägern (23) entspricht, so dass die Winkelgeschwindigkeit der Schwungräder (26) proportional zur Winkelgeschwindigkeit der zentralen Welle (20) zunimmt und umgekehrt.

15. Schwungradbatterie nach einem der vorhergehenden Ansprüche, wobei magnetische Ringe (29, 30) mit entgegengesetzten Polaritäten um die zentrale Welle (20) und/oder mindestens eine Sekundärwelle (24) angeordnet sind.

## Revendications

1. Batterie à volant d'inertie comprenant au moins un rotor (13) relié mécaniquement à au moins un volant d'inertie (26) par l'intermédiaire d'au moins un arbre central (20) apte à tourner autour d'un axe central (A), dans laquelle
l'arbre central (20) est relié à un ou plusieurs supports (23) comprenant au moins un moyeu dans lequel au moins un arbre secondaire (24) peut tourner, dans laquelle un ou plusieurs volants d'inertie (26) sont reliés mécaniquement à l'arbre secondaire (24) pour tourner autour de l'axe central (A) et autour d'un axe qui est sensiblement parallèle à l'axe central (A) et ne coïncide pas avec l'axe central (A), au moyen d'une transmission (27, 28).

2. Batterie à volant d'inertie selon la revendication précédente, dans laquelle le rotor (13) est claveté sur l'arbre central (20) et/ou les volants d'inertie (26) sont clavetés sur un ou plusieurs arbres secondaires (24).

3. Batterie à volant d'inertie selon l'une des revendications précédentes, dans laquelle les supports (23) comprennent au moins trois bras radiaux ayant un moyeu disposé à une extrémité de chaque bras radial, un arbre secondaire (24) étant disposé dans chaque moyeu.

4. Batterie à volant selon l'une des revendications précédentes, dans laquelle l'arbre central (20) comprend au moins deux supports (23), dans laquelle un support (23) est disposé entre au moins deux volants d'inertie (26) disposés sur au moins un arbre secondaire (24).

5. Batterie à volant d'inertie selon l'une des revendications précédentes, dans laquelle l'arbre central (20), les supports (23) et les volants d'inertie (26) sont disposés dans une chambre à vide (6-8) qui comprend une base supérieure (6), une base inférieure (7) et au moins une paroi latérale (8).

6. Batterie à volant d'inertie selon la revendication précédente, dans laquelle l'au moins un rotor (13) est disposé dans au moins un boîtier (14) fixé hermétiquement sur la base supérieure (6) et/ou sous la base inférieure (7) de la chambre à vide (6-8) et en communication fluidique avec l'intérieur de cette dernière.

7. Batterie à volant d'inertie selon la revendication précédente, dans laquelle l'au moins un boîtier (14) est fait d'un matériau diamagnétique.

8. Batterie à volant d'inertie selon l'une des revendications précédentes, dans laquelle au moins un actionneur (11) est approprié pour déplacer au moins un stator (12) vers ou depuis l'au moins un rotor (13) pour faire tourner le rotor (13) et/ou générer un courant électrique dans le stator (12).

9. Batterie à volant d'inertie selon l'une des revendications précédentes, dans laquelle l'au moins un rotor (13) est pourvu d'une pluralité d'aimants avec les polarités N-S orientées radialement par rapport à l'axe du rotor (13) et alternativement par rapport aux aimants adjacents.

10. Batterie à volant d'inertie selon l'une des revendications précédentes, dans laquelle ladite transmission (27, 28) est une transmission magnétique et/ou mécanique appropriée pour faire tourner les volants d'inertie (26) autour de leur axe dans un sens lorsque l'arbre central (20) tourne dans le sens opposé autour de l'axe central (A).

11. Batterie à volant d'inertie selon l'une des revendications précédentes, dans laquelle ladite transmission (27, 28) comprend au moins un pignon (27) qui est claveté sur au moins un arbre secondaire (24) et est engrené avec au moins une couronne dentée (28).

12. Batterie à volant d'inertie selon la revendication précédente, dans laquelle la couronne dentée (28) est fixée dans une chambre à vide (6-8) contenant les volants d'inertie (26).

13. Batterie à volant d'inertie selon la revendication 11 ou 12, dans laquelle la couronne dentée (28) a un engrenage intérieur dans lequel l'au moins un pignon (27) est engagé.

14. Batterie à volant d'inertie selon l'une des revendications 11 à 13, dans laquelle un rapport de vitesse donné directement proportionnel au rapport des dents des pignons (27) et de la couronne dentée (28) correspond à une rotation de l'arbre central (20) avec les supports (23), de sorte que la vitesse angulaire des volants d'inertie (26) augmente proportionnellement à la vitesse angulaire de l'arbre central (20), et vice versa.

15. Batterie à volant d'inertie selon l'une des revendications précédentes, dans laquelle des anneaux magnétiques (29, 30) de polarités opposées sont disposés autour de l'arbre central (20) et/ou d'au moins un arbre secondaire (24).
